Europäisches Patentamt

European Patent Office

Office européen des brevets

(11) Veröffentlichungsnummer: **0 606 338 B1**

(19)

(12) **EUROPÄISCHE PATENTSCHRIFT**

(45) Veröffentlichungstag der Patentschrift: **05.07.95**

(21) Anmeldenummer: **92920765.2**

(22) Anmeldetag: **01.10.92**

(86) Internationale Anmeldenummer:
**PCT/DE92/00848**

(87) Internationale Veröffentlichungsnummer:
**WO 93/07101 (15.04.93 93/10)**

(51) Int. Cl.⁶: **C04B 18/16**, C04B 11/26,
B01J 2/10, B01F 7/04

(54) **VERWENDUNG EINER MASCHINE ZUR GIPSKARTONPLATTENWIEDERAUFARBEITUNG.**

(30) Priorität: **04.10.91 DE 4132906**

(43) Veröffentlichungstag der Anmeldung:
**20.07.94 Patentblatt 94/29**

(45) Bekanntmachung des Hinweises auf die
Patenterteilung:
**05.07.95 Patentblatt 95/27**

(84) Benannte Vertragsstaaten:
**AT BE CH DE DK ES FR GB IT LI NL SE**

(56) Entgegenhaltungen:
**EP-A- 0 073 864
CH-A- 367 379
FR-A- 2 396 941**

(73) Patentinhaber: **GEBRÜDER LÖDIGE MASCHI-
NENBAU GMBH
Postfach 20 50
D-33050 Paderborn (DE)**

Patentinhaber: **BABCOCK-BSH AKTIENGE-
SELLSCHAFT vormals Büttner-Schilde-Haas
AG
Postfach 6
D-47811 Krefeld (DE)**

(72) Erfinder: **HIRZ, Harri
Am Berg 8
D-6431 Hauneck-Unterhaun (DE)**
Erfinder: **STERR, Horst
Von Vincke Weg 77
D-4790 Paderborn (DE)**

(74) Vertreter: **KOHLER SCHMID + PARTNER
Patentanwälte
Ruppmannstrasse 27
D-70565 Stuttgart (DE)**

EP 0 606 338 B1

## Beschreibung

Die Erfindung betrifft die Verwendung einer kontinuierlich arbeitenden Maschine, bestehend im wesentlichen aus einem horizontal gelagerten zylindrischen Behälter, der einen Produkteinlaufschacht und einen Produktauslaufschacht aufweist, einer im Behälter vorzugsweise in Stirnwänden gelagerten antreibbaren Welle, auf der Welle angebrachten Werkzeugen, die radial ausgerichtet von der Welle wegweisen und wobei die Welle im Froudezahlbereich FR ≧ 7 betrieben wird.

Eine derartig kontinuierlich arbeitende Maschine ist durch den Prospekt "Befeuchtungsmischer" WD 12.79 SM/Rd-e 47.1500 bekanntgeworden.

Die bekannte kontinuierlich, schnellaufende und kompakte Maschine ist für große Durchsatzmengen ausgelegt. Sie verarbeitet bekannterweise pulverförmige und kurzfaserige Stoffe mit flüssigen Medien und wird auf dem Gebiet der Feststoff-Flüssigkeitsvermischung eingesetzt. Die bekannte Maschine zeichnet sich zum einen durch eine gute Mischgenauigkeit in kurzen Verweilzeiten aus und große Durchsatzleistungen sind bei kleinen Maschinenabmessungen möglich.

Die auf der Welle angebrachten Werkzeuge rotieren in einem Froudezahlbereich von 7 bis 20, wobei die Froudezahl aus dem Quotienten der Drehzahl n und der kritischen Drehzahl $n_c$ gebildet ist.

$$Fr = \left[ \frac{n}{n_c} \right]^2$$

In diesem Drehzahlbereich wird das in die Maschine einströmende Produkt über die Werkzeuge Zentrifugalkräften unterworfen, die das Produkt an die Behälterinnenwand drücken. Das Produkt durchläuft in einem Produktring die Maschine. Dabei finden in bekannter Weise Vermischungsprozesse statt.

Bei der Herstellung von Gipskartonplatten fällt stets ein gewisser unverkäuflicher Ausschuß an, bestehend im wesentlichen aus schadhaften oder nicht normgerechten Platten. Der Ausschuß fällt teils unmittelbar nach dem Abbinden, teils nach der Trocknung der abgebundenen Platten an. In dem ersten Fall enthält er 30 bis 40 % Feuchte, in dem zweiten Fall ist das Ausschußmaterial praktisch absolut trocken. Die Menge des Ausschußmaterials ist in Abhängigkeit der einzelnen Herstellungsverfahren unterschiedlich; diese Menge liegt in der Regel zwischen 2 und 8 % der Produktmenge und erreicht in Extremfällen sogar 10 %.

Aus der Praxis ist es bekannt, den Ausschuß als Sekundärrohstoff wieder in den Produktionsprozeß zurückzuführen. Hierzu hat man zunächst die Platten grob vorzerkleinert. Das vorzerkleinerte Material ist eine Mischung aus Gipsbrocken und bis zu handtellergroßen Pappefetzen, an denen Gipsreste fest anhaften. Bei den am meisten verbreiteten Gipskartonplatten mit einem Flächengewicht von etwa acht Kilogramm pro m² liegt der Papieranteil bei 4,5 bis 5 %, bei Platten mit einem Flächengewicht von etwa 11 Kilogramm pro m² bei 3,4 bis 3,8 % Eine den Ansprüchen der Praxis genügende Trennung von Papier und Gips - etwa durch Sichtung - hat sich bisher produktionstechnisch nicht durchgesetzt.

Das grob vorzerkleinerte Gut ist in üblichen Kalzinatoren nicht verarbeitbar. Die Pappefetzen wurden z. B. in einem indirekt beheizten Drehrohrkalzinator auf dem Gipskörnerbett aufschwimmen und Knäuel bilden, die nicht zuverlässig ausgetragen werden, und daher den Kalzinator verstopfen können. Es besteht auch die Gefahr, daß beim Entleeren des Kalzinators trockenes Papier im Kalzinator zurückbleibt und beim Wiederanfahren eine Explosion auslöst.

Man hat auch schon das grob vorzerkleinerte Material zusammen mit frischem Naturgips einer Mühle zugeführt. Die bis zu etwa 30 mm großen Naturgipsbrocken bewirken in günstigen Fällen eine gewisse, aber nicht immer ausreichende weitere Zerkleinerung der Pappefetzen. Wenn feinkörniger Rauchgasgips oder Chemiegips als Rohstoff eingesetzt wird, ist eine zufriedenstellende weitere Zerkleinerung nicht möglich. Das Verfahren hat sich daher in der Praxis nicht durchsetzen können.

Gemäß der Erfindung wird die bekannte kontinuierlich arbeitende Maschine für das Aufbereiten des bei der Herstellung von Gipskartonplatten anfallenden Ausschußmaterials nach vorheriger Grobzerkleinerung verwendet.

Das bei der erfindungsgemäßen Verwendung in die Maschine einströmende Ausschußmaterial wird schon im Einzugsbereich auf eine Produktringbahn gepresst. Das Ausschußmaterial wird durch die Werkzeuge unter einer spiralförmig verlaufenden Produktbewegung im Produktring in überraschender Weise gleichmäßiger und effektiver als in den bisher verwandten Mühlen aufbereitet und dabei gleichzeitig homogenisiert.

Aufbereitet heißt hier, daß die Pappefetzen möglichst klein zerfasert werden und daß das übrige Ausschußmaterial möglichst auf Primärkorngröße reduziert wird. Am Produktaustritt erscheint das bearbeitete Gut in einem Kornspektrum, das für die Weiterbearbeitung in bekannten Kalzinatoren besonders geeignet ist. Der Wirkungsgrad und die Betriebssicherheit in den folgenden Bearbeitungsstufen wird dadurch deutlich erhöht. Weiterhin ist das nach der erfindungsgemäßen Verwendung behandelte Gut auch für eine Vermischung mit feinem Rohgips besonders geeignet.

Bei der erfindungsgemäßen Verwendung ist es auch möglich, daß in den Produktring Flüssigkeit eingebracht wird. Dies ist dann besonders von Vorteil, wenn der im Aufarbeitungsbetrieb erwünschte Feuchtegehalt noch nicht erreicht ist und/oder eine bestimmte Granulat- bzw. Agglomeratbildung erforderlich ist.

Zusätzlich kann im Produktraum eine Umkehrzone aus ortsfesten Prallwänden und/oder Prallstäben die gleichzeitig auch für die Flüssigkeitszugabe nutzbar sind, geschaffen werden, die im Zusammenwirken mit den rotierenden Werkzeugen eine zusätzliche Scherarbeit auf das Produkt ausüben können.

Nach der erfindungsgemäßen Verwendung ist die mittlere Verweilzeit des Ausschußmaterials im Behälter sehr kurz. D. h., eine mittlere Verweilzeit von 15 sec bis 150 sec ist ausreichend, um die tellergroßen grob verkleinerten Gipskartonplattenstücke soweit aufzuschließen, daß Einzelpartikelgrößen erreicht werden, die in einem indirekt oder direkt beheizten Kalzinator problemlos weiter zu verarbeiten sind.

Sollte es unter bestimmten Produktionsvoraussetzungen nicht möglich sein, daß in einer Maschine das angestrebte Korngrößenspektrum am Maschinenausgang erreicht wird, so kann eine weitere Maschine gemäß der erfindungsgemäßen Verwendung angereiht werden; in dieser Maschine kann dann bei Bedarf auch Zusätzlich gleichzeitig unter weiterer Aufschlußarbeit Trockenstoffe hinzugemischt werden.

Ist das zu verarbeitende Ausschußmaterial zu feucht, so können die Welle und/oder die Werkzeuge beheizt werden. Muß zusätzlich Friktionswärme von der Maschine abgeführt werden, so ist es auch möglich, die Welle bzw. die Werkzeuge zu kühlen. Die Werkzeuge sind bei der eingesetzten Maschine in Schäfte eingeschraubt, so daß das freie Ende der Werkzeuge durch eine mehr oder weniger weite Einschraubung in den Werkzeugschaft auf einfache Weise mehr oder weniger weit von der Behälterinnenwandung beabstandet werden kann.

Weiterhin ist es vorteilhaft, den zylindrischen Behälter so auszubilden, daß er aus zwei zueinander verschwenkbaren Halbschalen gebildet ist. Dies ermöglicht eine einfache Zugänglichkeit und die Werkzeuge können je nach Bedarf schnell ausgewechselt werden.

Wie auch der deutschen Patentanmeldung P 41 24 984.4 zu entnehmen ist, kann die Maschine nach der erfindungsgemäßen Verwendung auch mit einem Pflugscharmischer kombiniert werden, der zum einen eine zusätzliche Aufschlußarbeit leistet und zum anderen die im Verfahren zu behandelnden Güter homogen vermischt, so daß sie anschließend problemlos einem Kalzinator zugeführt werden können.

Besonders vorteilhaft ist es auch, wenn schon im Einzugsbereich der Maschine die Vorzerkleinerung der fehlerhaften Gipskartonplatten vorgenommen wird. Durch diese Anordnung von verschiedenen Bearbeitungsmaschinen können kompakte Anlageneinheiten erreicht werden.

Mit der nach der erfindungsgemäßen Verwendung benützten Maschine ist es auch möglich entgegen der Lehre nach P 41 24 984.4, ohne Messerköpfe die Wiederaufarbeitung der fehlerhaften Gipskartonplatten zufriedenstellend durchzuführen.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen näher erläutert. Es zeigen:

Fig. 1    eine für die erfindungsgemäße Verwendung eingesetzte Maschine in Gesamtansicht;

Fig. 2    einen Schnitt gemäß II - II der Fig. 1;

Fig. 3    ein Ausführungsbeispiel einer Anordnung mehrerer Maschinen, die bei der erfindungsgemäßen Verwendung benutzt werden.

Die einzelnen Figuren der Zeichnung zeigen die für die erfindungsgemäße Verwendung eingesetzten Maschinen teilweise stark schematisiert, und sind nicht maßstäblich zu verstehen.

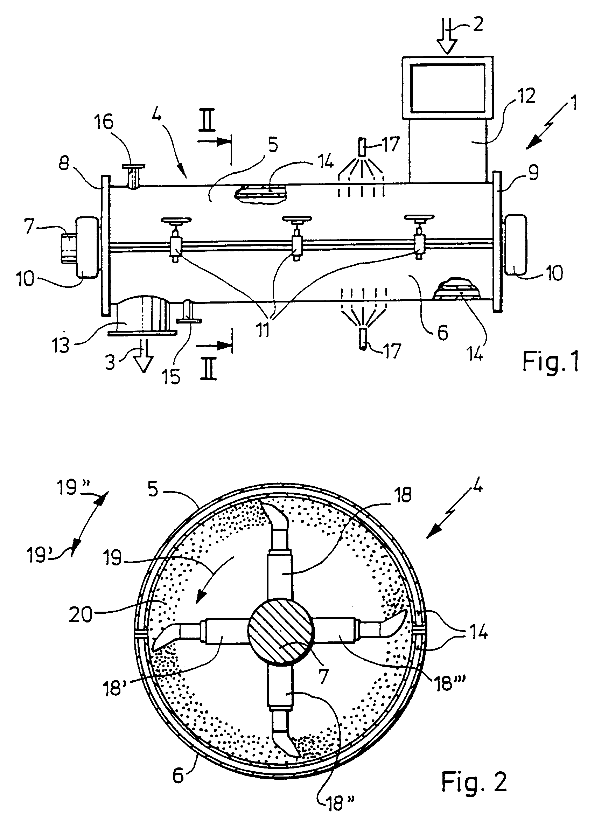

In Fig. 1 ist mit 1 eine für die erfindungsgemäße Verwendung eingesetzte Maschine in Gesamtansicht dargestellt. Pfeil 2 zeigt den Produktstrom an, wie er in die Maschine 1 einströmt. Mit Pfeil 3 ist der Produktstrom für das homogen aufgeschlossene Ausschußmaterial der Gipskartonplatten angegeben wie er behandelt aus der Maschine 1 strömt. Das Ausschußmaterial durchströmt einen Behälter 4 auf einer spiralförmigen Bahn. Das zu behandelnde Produkt wird dabei in einem Produktring eng an die Behälterinnenwand gepresst durch die Maschine 1 hindurchgeführt. Der Behälter 4 setzt sich aus einer ersten Halbschale 5 und aus einer zweiten Halbschale 6 zusammen. Die Halbschalen 5, 6 sind derart miteinander verbunden, daß sie zueinander verschwenkt werden können. In dem Behälter 4 ist eine Welle 7 bevorzugt über Stirnwände 8, 9 gelagert. In der Figur sind für die Welle 7 Lager 10 angedeutet. Die Welle 7 selbst ist antreibbar; die dafür geeigneten Antriebsmittel sind in der Fig. 1 nicht dargestellt. An der ersten und zweiten Halbschale 5, 6 sind Handverschraubungen 11 vorgesehen, über die die Halbschalen 5, 6 produktdicht zusammengehalten werden. An der ersten Halbschale 5 ist ein Produkteinlaufschacht 12 angebracht und an der zweiten Halbschale 6 ist ein Produktauslaufschacht 13 vorgesehen. In der Figur ist der Behälter 4 mit einem Mantel 14 versehen, über den der Behälter 4 erwärmt bzw. gekühlt werden kann. Medien wie Wasserdampf, Gase verschiedenster Art und Öl sind für die Erwärmung bzw. Kühlung geeignet. Über eine gezielte Temperaturführung kann eine Produktansatzbildung im Behälter 4 gesteuert werden. In der Figur sind für diese Medien ein Einlaufstutzen 15 und ein Auslaufstutzen 16 dargestellt. Über Einbauten 17 kann in den Produktring Flüssigkeit eingebracht werden. Die Einbauten 17, insbesondere Rohre, können auch als Prallstäbe dienen, die eine Umkehrzone definieren. Die Rohre können im Querschnitt eine beliebige Vieleckform aufweisen. In der Umkehrzone kann das zu behandelnde Gut zusätzlich Scherkräften unterworfen werden. Halbkreisförmige Scheibensegmente können als Prallwände die Prallstäbe ersetzen.

Im Produkteinlaufschacht 12 können Zerkleinerungswerke mit eigenen Antrieben vorgesehen sein, die die Grobzerkleinerung des Ausschußmaterials übernehmen.

Fig. 2 zeigt einen Schnitt II - II der Fig. 1. Die im Schnitt II - II im Hintergrund noch sichtbaren weiteren gegenständlichen Ausgestaltungen an der Maschine wie Handverschraubungen 11, Einbauten 17 und der Produkteinlaufschacht 12 sind, der besseren Übersicht halber, in der Figur nicht dargestellt. Gleiche Gegenstände werden in den Figuren mit denselben Bezugszeichen versehen.

Der Schnitt zeigt die Welle 7 mit aufgesetzten Werkzeugen 18, 18', 18'' und 18'''. Die Werkzeuge 18, 18', 18'' und 18''' bestehen aus einem Schaft, in den die freien hornförmigen Enden dieser Werkzeuge eingeschraubt sind. Über die Verschraubung läßt sich der Abstand der freien Enden der Werkzeuge 18, 18', 18'', 18''' zur Behälterinnenwand einfach einstellen. Die Welle 7 mit den Werkzeugen 18, 18', 18'' und 18''' dreht sich in Pfeilrichtung 19.

Auf Grund der Rotationsgeschwindigkeit der Werkzeuge 18, 18', 18'' und 18''' wird Ausschußmaterial 20 im Produktring spiralförmig durch den Behälter 4 geführt. Das Produkt wird dabei soweit aufbereitet, daß ein Kornspektrum erreicht wird, dessen Korngröße den störungsfreien Einsatz der eingangs genannten Kalzinatoren gestattet. In der Fig. 2 ist das Ausschußmaterial 20 gepunktet dargestellt.

Die Halbschalen 5, 6 weisen einen Mantel 14 auf, über den der Behälter 4 beheizt bzw. gekühlt werden kann. Die in der Fig. 2 als Vollwelle dargestellte Welle 7 kann auch als Hohlwelle ausgebildet sein, über die den Werkzeugen 18, 18', 18'', 18''' ein Heiz- bzw. Kühlmedium zugeführt wird. Die Werkzeuge 18, 18', 18'', 18'''sind in axialer Richtung über der ganzen Welle 7 verteilt. Die erste Halbschale 5 ist zur ortsfesten zweiten Halbschale 6 verschwenkbar. Pfeile 19' und 19''geben den Verschwenkvorgang an. Das auf einer Seite vom Behälter 4 angebrachte Schwenklager und die auf der anderen Seite angebrachten Verschlußmechanismen, die Handverschraubungen 11, sind in der Figur nicht dargestellt.

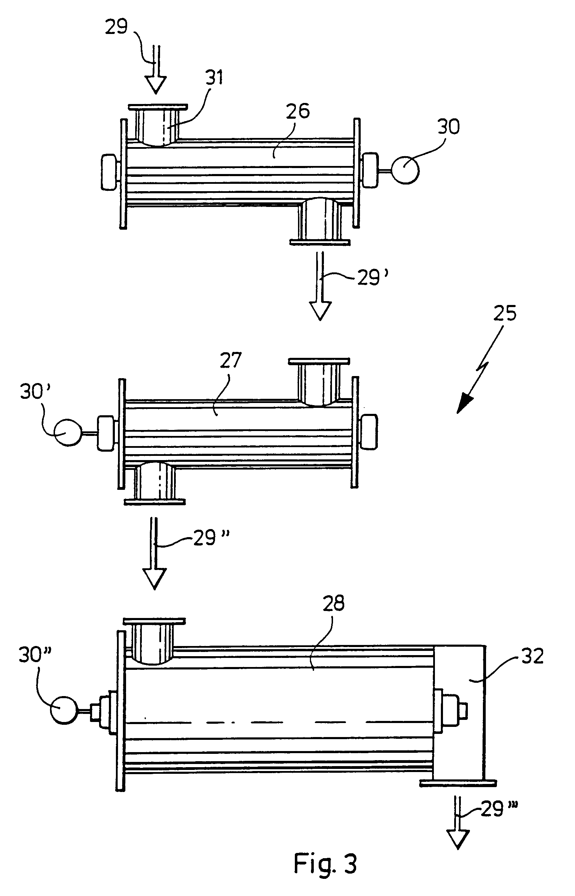

Fig. 3 zeigt eine beispielhaft zu verstehende Maschinenanordnung 25, wie sie für die erfindungsgemäße Verwendung eingesetzt werden kann. Eine nach der erfindungsgemäßen Verwendung beschriebene erste Maschine 26 und eine zweite Maschine 27 sind mit einem an sich bekannten Pflugscharmischer 28 in Reihenschaltung verbunden. Das aufzuarbeitende Ausschußmaterial durchströmt in Pfeilrichtung 29, 29', 29'', 29''' die Maschinenanordnung 25. Über symbolisiert dargestellte Antriebe 30, 30', 30''werden die einzelnen Maschinen 26, 27 und der Pflugscharmischer 28 angetrieben. Im Produkteinlaufschacht 31 können noch weitere, in der Figur nicht dargestellte Zerkleinerungswerkzeuge vorgesehen sein und über den Produktauslaufschacht 32 strömt das aufbereitete Ausschußmaterial in einen an sich bekannten Kalzinator. Der in der Figur gezeigten Maschinenanordnung 25 können noch weitere Maschinen zugeschaltet werden, sofern dafür ein Bedarf besteht.

Verwendung einer an sich bekannten kontinuierlichen Maschine für die Wiederaufarbeitung von Gipskartonplatten. Ein grob vorzerkleinertes Material wird in eine kontinuierlich arbeitende Maschine eingeführt und innerhalb der kontinuierlich arbeitenden Maschine wird das Ausschußmaterial 20 in einem Produktring spiralförmig durch den Behälter 4 geführt. Die über die axiale Länge auf einer Welle 7 angeordneten Werkzeuge 18, 18', 18'', 18''' rotieren in einem Froudezahlbereich $Fr \geq 7$ und schließen das vorzerkleinerte Ausschußmaterial 20 soweit auf, daß ein Kornspektrum erreicht wird, das den Einsatz von Kalzinatoren effektiv gestattet.

**Patentansprüche**

1. Verwendung einer kontinuierlich arbeitenden Maschine (1; 26, 27), bestehend im wesentlichen aus
   - einem horizontal gelagerten, zylindrischen Behälter (4), der einen Produkteinlaufschacht (12) und einen Produktauslaufschacht (13) aufweist,

- einer im Behälter (4) vorzugsweise in Stirnwänden (8, 9) gelagerten antreibbaren Welle (7),
- auf der Welle (7) angebrachten Werkzeugen (18, 18', 18'', 18'''), die radial ausgerichtet von der Welle (7) wegweisen und wobei die Welle (7) im Froudezahlbereich Fr ≥ 7 betrieben wird,

zum Aufbereiten des bei der Herstellung von Gipskartonplatten anfallenden Ausschußmaterials nach vorheriger Grobzerkleinerung.

2. Verwendung einer kontinuierlich arbeitenden Maschine (1; 26, 27) nach Anspruch 1, dadurch gekennzeichnet, daß die mittlere Verweilzeit des Ausschußmaterials (20) im Behälter (4) 15 bis 150 Sekunden beträgt.

3. Verwendung einer kontinuierlich arbeitenden Maschine (1; 26, 27) nach Anspruch 1 oder 2, dadurch gekennzeichnet, daß die Welle (7) und/oder die Werkzeuge (18, 18', 18'', 18''') gekühlt oder beheizt werden.

4. Verwendung einer kontinuierlich arbeitenden Maschine (1; 26, 27) nach einem der Ansprüche 1 bis 3, dadurch gekennzeichnet, daß der zylindrische Behälter (4) aus zwei zueinander verschwenkbaren Halbschalen (5, 6) gebildet wird.

5. Verwendung einer kontinuierlich arbeitenden Maschine (1; 26, 27) nach einem der Ansprüche 1 bis 4, dadurch gekennzeichnet, daß in einer ersten Maschine (26) eine Produktzerkleinerung und eine Homogenisierung eines Ausschußmaterials (20) erfolgt, und in einer zweiten Maschine (27) eine Vermischung des homogenisierten zerkleinerten Ausschußmaterials (20) mit zusätzlichen Schüttgütern erfolgt.

6. Verwendung einer kontinuierlich arbeitenden Maschine (1; 26, 27) nach einem der Ansprüche 1 bis 5, dadurch gekennzeichnet, daß das in dem Behälter (4) behandelte Ausschußmaterial (20) zu einer weiteren Behandlung einem kontinuierlich arbeitenden Mischer (28) zugeführt wird.

7. Verwendung einer kontinuierlich arbeitenden Maschine (1; 26, 27) nach einem der Ansprüche 1 bis 6, dadurch gekennzeichnet, daß das behandelte Ausschußmaterial (20) einem indirekt oder direkt beheizten Kalzinator zugeführt wird.

8. Verwendung einer kontinuierlich arbeitenden Maschine (1; 26, 27) nach einem der Ansprüche 1 bis 6, dadurch gekennzeichnet, daß die Grobzerkleinerung im Bereich des Produkteinlaufschachtes (13; 31) erfolgt.

9. Verwendung einer kontinuierlich arbeitenden Maschine (1; 26, 27) nach einem der Ansprüche 1 bis 8, dadurch gekennzeichnet, daß der Behälter (4) Einbauten (17) aufweist, die eine Flüssigkeitszugabe und/oder eine Umkehrzone definieren.

10. Verwendung einer kontinuierlich arbeitenden Maschine (1; 26, 27) nach Anspruch 9, dadurch gekennzeichnet, daß über die Einbauten (17) eine gesteuerte Flüssigkeitszugabe für die Granulatbildung erfolgt.

## Claims

1. Use of a continuous-operation machine (1; 26, 27) consisting essentially of
   - a horizontally positioned, cylindrical container (4) which exhibits a product feed chute (12) and a product exit chute (13),
   - a driveable shaft (7) which is mounted in the container (4), preferentially to the front walls (8, 9),
   - tools (18, 18', 18'', 18''') mounted on the shaft (7) which are radially directed away from the shaft (7), whereby the shaft (7) is operated in the Froude number range Fr ≥ 7,

   for the processing, following a coarse pre-pulverization, of waste material resulting from the production of gypsum plaster boards.

2. Use of a continuous-operation machine (1; 26, 27) according to claim 1, characterized in that the mean residence time of the waste material (20) in the container (4) assumes a value between 15 to 150 seconds.

3. Use of a continuous-operation machine (1; 26, 27) according to claim 1 or 2, characterized in that the shaft (7) and/or the tools (18, 18', 18'', 18''') are cooled or heated.

4. Use of a continuous-operation machine (1; 26, 27) according to any one of claims 1 to 3, characterized in that the cylindrical container (4) is formed from two half-shells (5, 6) which are pivotable with respect to each other.

5. Use of a continuous-operation machine (1; 26, 27) according to any one of claims 1 to 4, characterized in that, in a first machine (26), a product pulverization and a homogenization of a waste material (20) takes place and, in a second machine (27), a mixing of the homogenized pulverized waste material (20) with additional bulk material takes place.

6. Use of a continuous-operation machine (1; 26, 27) according to any one of claims 1 to 5, characterized in that the waste material (20) processed in the container (4) is introduced into a continuous-operation mixer (28) for further processing.

7. Use of a continuous-operation machine (1; 26, 27) according to any one of claims 1 to 6, characterized in that the processed waste material (20) is introduced into an indirectly or directly heatable calcination device.

8. Use of a continuous-operation machine (1; 26, 27) according to any one of claims 1 to 6, characterized in that the coarse pulverization takes place in the vicinity of the product feed chute (13; 31).

9. Use of a continuous-operation machine (1; 26, 27) according to any one of claims 1 to 8, characterized in that the container (4) exhibits mountings (17) which define a fluid feed and/or a return zone.

10. Use of a continuous-operation machine (1; 26, 27) according to claim 9, characterized in that, for the formation of granulated material, fluid is added in a controlled manner via the mountings (17).

**Revendications**

1. Utilisation d'une machine (1 ; 26, 27) qui fonctionne en continu, qui comprend essentiellement :
   - un réservoir cylindrique (4) monté horizontalement, qui comprend une trémie d'entrée (12) et une trémie de sortie (13) pour le produit ;
   - un arbre (7) susceptible d'être entraîné, monté dans le réservoir (4) et de préférence dans des parois frontales (8, 9) ;
   - des outils (18, 18', 18'', 18''') montés sur l'arbre (7), qui sont dirigés radialement en éloignement de l'arbre (7), et l'arbre (7) étant entraîné dans la plage où le nombre de Froude $Fr \geq 7$,
   
   pour la préparation, après broyage grossier préalable, du matériau de rebut qui se produit lors de la fabrication de plaques de parement en plâtre.

2. Utilisation d'une machine fonctionnant en continu (1 ; 26, 27), selon la revendication 1, caractérisée en ce que le temps de séjour moyen du matériau de rebut (20) dans le réservoir (4) s'élève de 15 à 150 secondes.

3. Utilisation d'une machine fonctionnant en continu (1 ; 26, 27), selon l'une ou l'autre des revendications 1 ou 2, caractérisée en ce que l'arbre (7) et/ou les outils (18, 18', 18'', 18''') sont refroidis ou réchauffés.

4. Utilisation d'une machine fonctionnant en continu (1 ; 26, 27), selon l'une quelconque des revendications 1 à 3, caractérisée en ce que le réservoir cylindrique (4) est formé de deux demi-coquilles (5, 6) susceptibles de basculer l'une par rapport à l'autre.

5. Utilisation d'une machine fonctionnant en continu (1 ; 26, 27), selon l'une quelconque des revendications 1 à 4, caractérisée en ce que dans une première machine (26) a lieu un broyage et une homogénéisation d'un matériau de rebut (20), et dans une seconde machine (27) a lieu un mélange du matériau de rebut (20) broyé et homogénéisé avec des produits en vrac additionnels.

6. Utilisation d'une machine fonctionnant en continu (1 ; 26, 27), selon l'une quelconque des revendications 1 à 5, caractérisée en ce que le matériau de rebut (20) traité dans le réservoir (4) est admis vers un traitement supplémentaire dans un mélangeur (28) qui fonctionne en continu.

7. Utilisation d'une machine fonctionnant en continu (1 ; 26, 27), selon l'une quelconque des revendications 1 à 6, caractérisée en ce que le matériau de rebut traité (20) est admis dans un calcinateur chauffé indirectement ou directement.

8. Utilisation d'une machine fonctionnant en continu (1 ; 26, 27), selon l'une quelconque des revendications 1 à 6, caractérisée en ce que le broyage grossier a lieu dans la région de la trémie d'entrée (13 ; 31) du produit.

9. Utilisation d'une machine fonctionnant en continu (1 ; 26, 27), selon l'une quelconque des revendications 1 à 8, caractérisée en ce que le réservoir (4) comprend des éléments intégrés (17) qui définissent une addition de liquide et/ou une zone d'inversion.

10. Utilisation d'une machine fonctionnant en continu (1 ; 26, 27), selon la revendication 9, caractérisée en ce qu'une addition commandée de liquide a lieu par l'intermédiaire des éléments intégrés (17), pour la formation d'un granulé.

EP 0 606 338 B1

Fig. 1

Fig. 2

8

Fig. 3